(19) **Europäisches Patentamt / European Patent Office / Office européen des brevets**

(11) **EP 3 968 197 B1**

(12) **EUROPEAN PATENT SPECIFICATION**

(45) Date of publication and mention
of the grant of the patent:
**25.03.2026  Bulletin 2026/13**

(21) Application number: **20919950.4**

(22) Date of filing: **25.02.2020**

(51) International Patent Classification (IPC):
**G06F 21/56** (2013.01)    **G06F 16/00** (2019.01)
**G06F 21/57** (2013.01)    **G06N 20/00** (2019.01)
**H04L 9/40** (2022.01)    **G06N 5/02** (2023.01)
**G06N 20/20** (2019.01)    **G06N 20/10** (2019.01)

(52) Cooperative Patent Classification (CPC):
**G06F 21/565; G06F 21/563; G06F 21/577;
G06N 5/02; G06N 20/10; G06N 20/20;
H04L 63/1425;** G06F 2221/033; G06T 2207/20084

(86) International application number:
**PCT/RU2020/000089**

(87) International publication number:
**WO 2021/167483 (26.08.2021 Gazette 2021/34)**

(54) **METHOD AND SYSTEM FOR DETECTING MALICIOUS FILES IN A NON-ISOLATED ENVIRONMENT**

VERFAHREN UND SYSTEM ZUR DETEKTION VON BÖSARTIGEN DATEIEN IN EINER NICHTISOLIERTEN UMGEBUNG

PROCÉDÉ ET SYSTÈME DE RÉVÉLATION DE FICHIERS MALVEILLANTS DANS UN MILIEU NON ISOLÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **21.02.2020  RU 2020107922**

(43) Date of publication of application:
**16.03.2022  Bulletin 2022/11**

(73) Proprietor: **GROUP-IB GLOBAL PRIVATE LIMITED
068900 Singapore (SG)**

(72) Inventor: **PRUDKOVSKIJ, Nikolay Sergeevich
Moscow, 117485 (RU)**

(74) Representative: **Pribic, Jelena
MSA IP - Milojevic, Sekulic & Associates
Bulevar Mihajla Pupina 6
11070 Beograd (RS)**

(56) References cited:
US-A1- 2017 006 045    US-A1- 2017 006 045
US-A1- 2017 068 816    US-A1- 2017 262 633
US-A1- 2017 262 633    US-A1- 2018 025 157
US-A1- 2018 165 452    US-A1- 2018 365 420
US-A1- 2019 005 239

**EP 3 968 197 B1**

**Description**

<u>FIELD</u>

This technical solution relates to a computer field, in particular to the computer-implementable method and system for detecting malicious files in a non-isolated environment.

<u>BACKGROUND</u>

The prior art US 2019/0005239 A1, 03.01.2019, discloses a method for analyzing a malicious code by electronic device, where the malicious code is analyzed by means of an electronic device, wherein the method comprises the following steps: receiving the executable file; analyzing the executable file for collection of data on suspicious malicious code from the executable file prior to install the received executable file; normalizing the collected data on suspicious malicious code and analyzing them based on probabilistic model algorithm to define data on the assumed malicious code and a conclusion of the defining result.

The prior art discloses one more solution RU 2654146 C1 selected as the closest prior art. This prior art discloses a system for acknowledging a file to be malicious, which comprises: a) means for resource extraction intended to: extract resources from the file analyzed; transmit the resources extracted to the rule formation means and rule search means; b) the rule formation means intended to: form at least one rule regulating functional relationship between the obtained resources (hereinafter the rule), while the rule is formed by creating artificial neural network from the resources obtained, where the nodes of the artificial neural network are the means of the obtained resource analysis and relationships between the nodes, formed during creation of the neural network, indicate the functional relationship between the resources obtained; transmit each formed rule to the rule comparison means; c) the rule search means intended to: searching for at least one rule in the malicious file resource base on the basis of the resources obtained; transmit each rule found to the rule comparison means; d) the rule comparison means intended to: compute a degree of commonality between the rules received from the rule formation means and the rule search means; transmit the degree of commonality computed to the decision means; e) the decision means intended to: acknowledge the file analyzed to be malicious if the degree of commonality obtained exceeds the threshold preset .

The above prior art solutions are intended to solve the problem of detecting malicious files before their launching. However, it is worth noting that the developers continuously enhance their malwares that reduces the likelihood of their detection in the system.

The solution proposed is intended to remove disadvantages of the prior art and differs from the prior art solutions in that the method proposed is based on the statistical analysis involves bigger amount of data extracted from the file, since as binary as sorce executable file is used for their obtaining, besides, we propose to use control flow graphs which contribute to detect abnormalities in file behavior without its starting. Additionally, it is worth noting that the claimed solution uses classifier ensemble which serves to improve efficiency of prediction as compared to individual classifiers, and is also less massive solution than neural network.

<u>SUMMARY</u>

A technical problem to be solved by a technical solution claimed, is a creation of computer-implementable method and system for detecting malicious files in non-isolated environment, which are defined in the primary claims. Additional variants of this techinique implementation are presented in the subclaims.

A technical result consists of improving the accuracy of detecting malicious files in non-isolated environment.

The result claimed is achieved by implementation of the computer-implementable method for detecting malicious files in non-isolated environment, the method comprises:

preparatory step, wherein:

creating a collection of files, the collection of files comprises at least one malicious executable file and at least one non-malicious executable file;
analyzing at least one executable file, wherein:

extracting a data from both a binary and a disassembled forms of the executable file,
based on the data extracted creating a parameters for further classifier training, wherein additionally determining the parameters specific to a malicious files and/or vice versa to a non-malicious files by a statistical method;
wherein additionally extracting a first control flow graph and a second data flow graph;
constructing a first feature vector and a second feature vector based on the created parameters;
creating an ensemble of a classifiers from: a first trained classifier based on the first feature vector, a second

**2**

trained classifier based on the second feature vector; a third classifier trained on the basis of the first control flow graph, a fourth classifier trained on the basis of the second control flow graph, and

wherein predefining a decisive priority for each classifier;

operating step, wherein:

obtaining at least one executable file;

starting the ensemble of classifiers trained at the preparatory step to detect the malicious executable files;

outputting the analysis result.

In the particular embodiment of the method described the first feature vector comprises all numerical parameters obtained at the analysis, and the second vector comprises all string parameters obtained at the analysis.

In other particular embodiment of the method described at least following file properties are extracted: the first control flow graph, the second data flow graph , a metadata, an import table, an export table, a byte/ an entropy histogram.

In other embodiment of the method described at least a following parameters from at least one binary executable file are extracted:

- a byte n-grams;
- an information from an executable file fields;
- a file section entropy;
- a metadata;
- a line length distribution histograms.

In other embodiment of the method described the information extracted from the fields of at least one binary executable file comprises at least: a number of sections in the file, a size of headers, a code size, an availability of digital signature, an availability of imported dll and a functions where these libraries have been used, a names of exported functions, a data from a resource catalogue, an assembler version.

In other embodiment of the described method the entropy extracted from the fields of at least one binary executable file is calculated using a sliding-window method followed by a number of statistical measures to characterize the obtained entropy measure vector.

In other embodiment of the described method the metadata extracted from the header of at least one binary executable file comprises: the number of sections in the file, the size of sections, an availability of a checksum, a file size, a creation time, an operating system version, the assembler version.

In other embodiment of the method described at least following parameters from at least one disassembled executable file are extracted :

- characters;
- registers;
- operation codes;
- system interface (Windows APIs) access rate;
- sections;
- metadata.

In other embodiment of the method described a frequency of occurrence of characters extracted from at least one disassembled executable file is additionally defined, wherein the characters could be at least: "-", "+", "*", "]", "[", "?", "@".

In other embodiment of the method described a ratio between the number of known registers extracted from at least one disassembled executable file and a number of unknown registers extracted from at least one disassembled executable file is furthercalculated.

In other embodiment of the method described the sections extracted from at least one disassembled executable file are predefined and the sections are: .text, .data, .bss, .rdata, .edata, .idata, .rsrc, .tls and .reloc.

In other embodiment of the method described the metadata extracted from at least one disassembled executable file are a file size and a number of code lines.

In other embodiment of the method described the analysis result could be either binary or probabilistic.

In other embodiment of the method describedthe decisive priority of each ensemble of classifiers is defined based on a test sample, wherein at least following is used for estimation: an accuracy, a completeness, a F-measure.

The result claimed is also achieved by a system for detecting malicious files in non-isolated environment, the system comprises:

- a data extraction module configured to extract data from at least one executable file;

- a computer device configured to implement the above method;
- an output module.

DESCRIPTION OF THE DRAWINGS

Implementation of the technique will be further described in accordance with the attached drawings attached, which are presented herein to clarify the technique chief matter and by no means to limit the field of the technique. The following drawings are attached to the application:

Fig. 1 illustrates the system for detecting malicious files in a non-isolated environment.

Fig. 2 illustrates the computer-implementable method for detecting malicious files in a non-isolated environment.

Fig. 3 illustrates the block diagram of a file analysis based on a control flow graph.

Fig. 4a, illustrates the example of identifying points in the program.

Fig. 4b, illustrates the example of identifying points in the program.

Fig. 5 illustrates the example of a computer device schematic diagram.

DETAILED DESCRIPTION

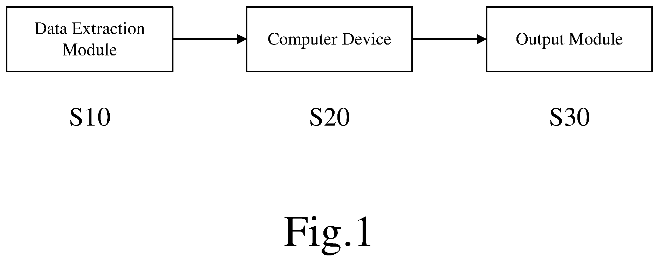

The numerous implementation details intended to ensure clear understanding of this technique are listed in the detailed description given next. However, it is obvious to a person skilled in the art how to use this technique as with the given implementation details as without them. In other cases, the well-known methods, procedures and components have not been described in detail in order not to obscure unnecessarily understanding of the present technique.
Besides, it will be clear from the given description that the technique is not limited to the given implementation. Numerous possible modifications, changes, variations and replacements retaining the chief matter and form of this technique will be obvious to persons skilled in the art.
Currently, there is a necessity to detect and block malicious files before their launch to prevent computer systems from possible harm. Methods of statistic analysis (PE) of executable files are used for solving similar problems; however, such analysis has certain limitations.
This technique is intended to provide the computer-implementable method and system for detecting malicious files in a non-isolated environment.
The computer-implementable method for detecting malicious files in a non-isolated environment claimed is implemented by the system for detecting malicious files in non-isolated environment illustrated in Fig. 1, which comprises at least: a data extraction module configured to extract data from at least one executable file (S10), a computer device configured to implement the method for detecting malicious files in non-isolated environment (S20) and an output module (S30).

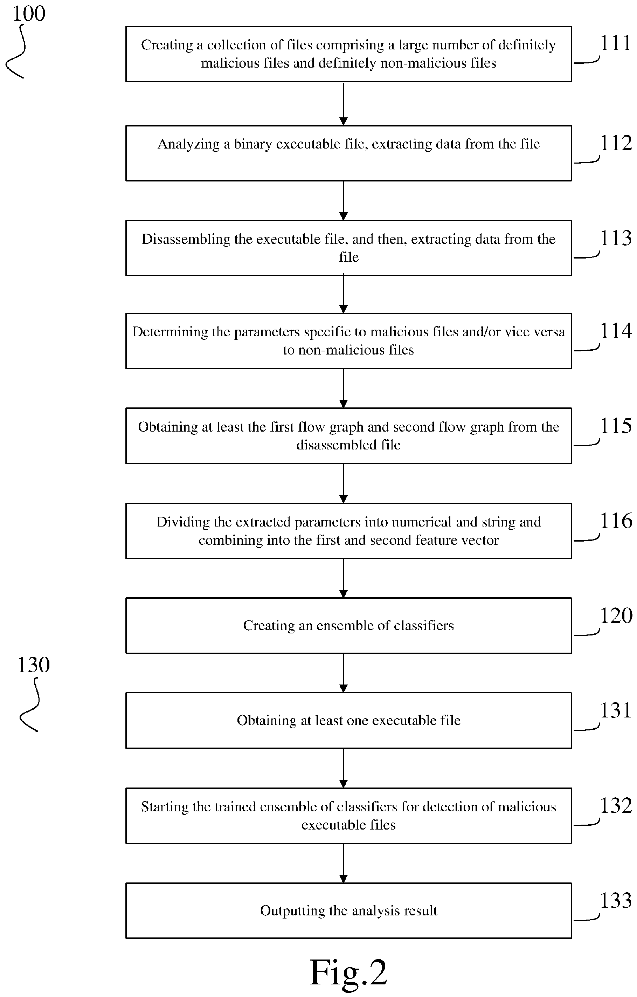

Fig. 2 illustrates the computer-implementable method for detecting malicious files in non-isolated environment 100, which is implemented as follows.
At the preparatory step 110 creating 111 a collection of files comprising a large number of executable files known to be malicious and a comparable number of executable files known to be non malicious.
Then, the method proceeds to the step where each binary as well as each disassembled executable file is analyzed for obtaining a large amount of data which will be used for making a decision on the file's maliciousness.
Therefore, first at step 112 each binary executable file is analyzed, while at least the following is extracted by the data extraction module (S10) during the analysis: data from the PE-header, data from the Import Table, data from the Export Table, byte n-grams, information from the executable file fields, file section entropy, metadata, string length distribution histograms.
It is worth noting that normally the following is extracted:

- data from the Import Table to specify what external functions and from which modules are required for the executable file to operate normally;
- data from the Export Table specifying names and/or numbers of the exported functions with their position in the process virtual memory;
- metadata from the executable file header, for example, number of sections in the file, creation time, processor type, operating system version, assembler version, total size of sections, checksum;

- data from the Import Table to specify what external functions and from which modules are required for the executable file to operate normally;
- data from the Export Table specifying names and/or numbers of the exported functions with their position in the process virtual memory;
- metadata from the executable file header, for example, number of sections in the file, creation time, processor type, operating system version, assembler version, total size of sections, checksum;Byte/Entropy Histogram, modeling byte distribution in the file (in order to assemble the byte entropy histogram, 1024-byte window, which is shifted in increments of 256 bytes inside the analyzed binary file, is used).

The following extracted parameters can be considered in greater details:

Byte n-grams, where in this case a sequence of n bytes extracted from the executable file is taken, and each element of byte sequence can have one of 256 values. Therefore, the byte frequency histograms in the form of 256 length vectors is considered, which represent frequency of each value occurrence.

Information from the executable file fields, for example, number of sections in the file, size of headers, code size, availability of digital signature, names of imported dll and functions where these libraries have been used, names of exported functions, data from the resource catalogue, assembler version, operating system version, processor type, total size of sections, checksum.

File section entropy, wherein file entropy calculation is used in the statistical analysis for detecting code obfuscation. It is worth noting that malware is often transmitted in an encrypted form, accordingly a byte frequency is equalized whereby increasing the entropy.

The described solution can use a method of sliding window to represent the executable file in the form of a set of entropy measures. Window entropy is calculated, and after calculation, for the purpose of this set characterization, the set of statistical measures is considered, for example, mathematical expectation, variance, quantile, percentile. Thus, for example, if the entropy is close to 1, i.e. occurrence of different characters is nearly the same, the code is obfuscated and/or encrypted.

Line length histograms, wherein all ASCII lines are extracted from the executable files and their lengths are recorded, since during such extraction a lot of "trash" is sampled, using of the obtained lines as parameters is not wholly correct, therefore, the solution described uses line length distribution histograms.

Then, at step 113 the executable file is disassembled and then, at least following parameters are extracted for analysis by the data extraction module.

Characters, where characters mean frequency of occurrence of at least following characters: +, *, ], [, ?, @, since they are specific to the code which tries to bypass the detection system, for example, by making indirect calls or downloading a dynamic library.

Registers, since the majority of register names characterize their purpose, however, in some malwares they are renamed to complicate the analysis. Therefore, it is considered in the described solution that frequency of using unknown registers could be useful to determine software harmfulness degree. Besides, for further analysis such parameters are also introduced: number of known registers, number of unknown (renamed) registers, ratio between the known registers and the unknown ones.

Operation codes, wherein, the codes more frequently used by the malware are detected beforehand, and frequency of their occurrence in the code itself is also predetermined. Since the list of all instructions is rather big, the most popular operation codes stored in the system internal database are used for analysis.

System interfaces (Windows APIs) access rate, wherein, it is also possible to use Windows APIs access rate for analysis, but since the number of such interfaces is too large, the most specific for the malware are selected and stored in the system internal database for the sake of improving the efficiency.

Sections of the executable PE file, which consists of several predefined sections, such as .text,.data, .bss, .rdata, .edata, .idata, .rsrc, .tls and .reloc.

For example, characteristics of these sections, which are used in the analysis, are given in the Table 1.

Table 1.

| Parameter name | Meaning |
| --- | --- |
| bss_lines_number | number of lines in .bss section |
| data_lines_number | number of lines in .data section |
| edata_lines_number | number of lines in .edata section |
| idata_lines_number | number of lines in .idata section |
| rdata_lines_number | number of lines in .rdata section |

(continued)

| Parameter name | Meaning |
| --- | --- |
| rsrc_lines_number | number of lines in .rsrc section |
| text_lines_number | number of lines in .text section |
| tls_lines_number | number of lines in .tls section |
| reloc_lines_number | number of lines in .reloc section |
| known_sections_number | total number of sections |
| unknown_sections_number | total number of unknown sections |
| known_sections_pr | proportion of known sections of total number |
| unknown_sections_pr | proportion of unknown sections of total number |
| .text_pr | proportion of .text section of the whole file |
| .data_pr | proportion of .data section of the whole file |
| .bss_pr | proportion of .bss section of the whole file |
| .rdata_pr | proportion of .rdata section of the whole file |
| .edata_pr | proportion of .edata section of the whole file |
| .idata_pr | proportion of .idata section of the whole file |
| .rsrc_pr | proportion of .rsrc section of the whole file |
| .tls_pr | proportion of .tls section of the whole file |
| .reloc_pr | proportion of .reloc section of the whole file |

Metadata, namely, the obtained file size and number of code lines are extracted after disassembling.

Then at step 114 all the parameters specific to malicious files and/or vice versa to non-malicious ones are determined by the statistical method.

For example, it is possible to test for availability of a checksum as a parameter, where, if it is missing - this is specific to malware; or if the proportion of unknown sections of the total number is close to 1, there is much obfuscation in the code, that is specific to malware, or if the proportion of known sections is close to 0, everything is more or less standard and this is specific to legitimate software, or very frequent call of certain API is specific to malware.

Besides, at step 115 obtaining at least the first control flow graph (ControlFlowGraph) and the second data flow graph (Data Flow Graph) from the disassembled file.

The first control flow graph is a variety of all possible ways of the program running, represented as a graph, while use of the Control Flow Graph in the static code analyzer is conditioned by its ability to find unique ways of quick and optimal execution.

The second data flow graph (DataFlowGraph) serves to represent dependence of one variables from the other ones taking into account their visibility and execution context, therefore the data flow analysis is directly related to the control flow analysis, since the execution context knowledge is taken from there.

Besides, it is also worth noting that the first control flow graph and the second data flow graph are obtained by constructing a finite-state automation for all possible variants of the sequence of system calls of the program. Thus, the algorithm records cyclic and branching structures of the program, enabling it to identify behavior variations and detect abnormalities. The ability to focus on program behavior contributes to the shorter system training periods and a smaller number of false responses, and also less requirements to the memory. Abnormality detection algorithm used in the solution described is based on representing the system call sequence in the form of a finite-state automation (FSA).

Then, the method proceeds to step 116, where all the extracted parameters are divided into numerical and string ones and combined into the first and second feature vector respectively.

Thus, all numerical parameters, for example, section entropy, each section size, ratio between the known sections and the unknown ones, proportion of .text sections of the whole file, number of lines in each section, frequency of occurrence of code obfuscating characters (-, +, *, ], [, ?, @), etc., are recorded into the vector comprising float values (i.e. floating point numbers).

The numerical vector is as follows: each cell has its purpose, i.e. it is responsible for the preset attribute.

For example:

cell 1 - known_sections_number = 10;
cell 2 - unknown_sections_pr = 0.93 (proportion of unknown sections of total number);
cell 3 - some_section_lines_number = 505 (number of lines in a section);
n-1 cell - lines_number = 5623 (number of code lines in the disassembled file);
n cell - file_size = 10893 (file size in bytes).

It is worth noting that the vector length depends on a number of different features identified at the feature extraction step.

The composed vector is transmitted to the first binary classifier (e.g. Random Forest), which output is a probability of file harmfulness (0 - clean file, 1 - malicious file).

It is worth noting that all string parameters, for example, names of exported functions, data from the resource catalogue, names of imported DLL and functions where these libraries have been used, etc. are recorded into the vector comprising boolean values, i.e. whether the data occurred or not.

The string vector is as follows:

cell name - extracted data;
cell meaning - True or False (occurred or not).

Then, after the step of extracting all possible string data the feature vector is created as follows. Thus, all found string attributes are transmitted to the encoder. After that, the data are converted into the vector consisting of 0 и 1, boolean vector, to reduce the required storage memory.

Thus, the first and second feature vectors are obtained at the described step.

After step 116 completion the systems proceeds to step 120 where the classifier ensemble is created.

For the purpose of the classifier ensemble creation, first of all there is training the first classifier on the basis of the first feature vector, the second classifier on the basis of the second feature vector, the third classifier on the basis of the first data flow, the fourth classifier on the basis of the second data flow.

It is worth noting that in the additional embodiment the fifth classifier, oriented to operation code n-grams analysis, could be added to the classifier ensemble.

It is worth noting that each of the classifiers can represent, for example, RandomForest and/or SVM type classifiers.

It is worth noting that each of the classifiers in the classifier ensemble is additionally characterized by the decisive priority, while the decisive priority is determined based on the accuracy of the classifier operation in both classes (malware and benign) using the test sample.

Besides, the test basis is the test sample, where the correspondence between objects and their classes is written down. The following metrics are used for estimation: accuracy, completeness and F-measure. Namely, the following is used: system accuracy within the class - proportion of objects actually belonging to this class in relation to all the objects which the system includes with this class; system completeness - proportion of all the objects identified by the classifier, which belong to the class in relation to all the documents of this class in the test sample, and F-measure which is a harmonic mean between accuracy and completeness, while it tends to zero, if accuracy or completeness tends to zero.

The detailed example of the statistical analysis based on the diagrams of the first and second data flows is given below.

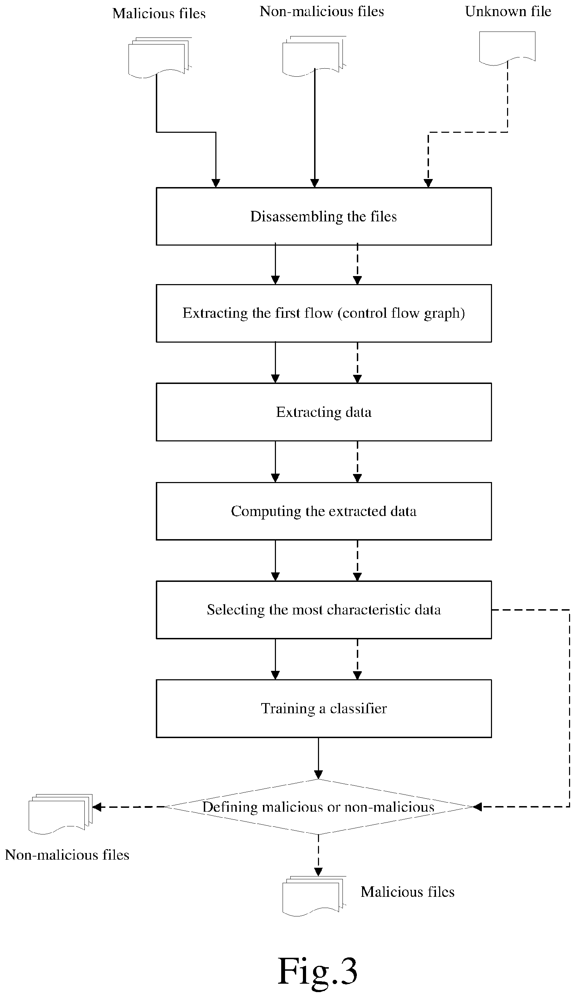

It is worth noting that the third classifier is trained on the basis of the first flow. The detailed description of the executable files analysis on the basis of the first control flow graph is given below (see Fig. 3). Fig. 3 illustrates the block diagram of file analysis on the basis of the control flow graph, wherein: disassembling the received executable files (113), extracting the first control flow graph (115), some number (statistical analysis, for example, how often this parameters occurs in the training sample) is assigned to each identified parameter, and this number is further used as a basis for selection of the most specific parameters for the third classifier training. Fig. 3 illustrates the training operations with a solid line, and working operations - with a broken line.

The Control Flow Graph - is a variety of all possible ways of the program running, represented as a graph.

At step 113 disassembling the file, since prior to analyze PE file, it is necessary to disassemble it (for example, using IDA Pro) and, if necessary, to unpack (if it has been packed by some packager). Unpacking can be done using, for example, standard UPX packager of executable files.

Then it is required to construct the control flow graph (CFG) (step 115). In CFG each node (point) of the graph corresponds to the basic block - straight-line section of the code comprising neither control transfer operation, nor points, where the control is transferred to from the other program parts. The first block instruction is the point where the branch is executed to, the last instruction - branch instruction to the other block.

It is worth noting that the graph is oriented. Directed arcs are used in the graph to represent branch instructions. Also, in the most of embodiments two dedicated blocks are added:

input block, through which control enters the graph;
output block, which completes all the paths in this graph.

For the purpose of extracting the control flow graph from the disassembled PE file the script is written in Python, which uses standard APIs, e.g. IDA Pro to extract information about each block:

$$ClassTreeNode \begin{cases} BlockID(Numeric) \\ StartAddr(Hex) \\ EndAddr(Hex) \\ LeftChild(Pointer) \\ RightChild(Pointer) \end{cases} \qquad (1),$$

where BlockID - unique block ID, StartAddr - start address, EndAddr - end address, LeftChild - all assembler instructions comprised in the basic block, RightChild - descendant blocks (their unique ID).

After extraction of the basic block information a graph for representing the control flow is created, while cycles are avoided, since their consideration will result in infinitely long execution paths.

Then, it is necessary to represent the graph in the form of the operation code call sequence.

For this purpose the modified algorithm of depth-first traversal is used with addition of testing for cycles and their rejection as they are detected:

$$Counter = 0$$
$$Push \quad Start_{Node} \quad on \quad Stack$$
$$While \quad Stack != Empty \quad do$$
$$Pop \quad Stack$$
$$Curr_{ExecPath} = Curr_{ExecPath} \quad \cup \quad Basic \ BlockID$$
$$Counter = Counter + 1$$
$$If \quad Exists(RightChild) \quad and \quad RightChild \not\subset Curr_{ExecPath}$$
$$Push \quad RightChild \quad on \quad Stack$$
$$Path_{Len} = Path_{Len} + Counter$$
$$endif$$
$$If \quad NotExists(LeftChild) \quad and \ LeftChild \subset Curr_{ExecPath}$$
$$Total_{ExecPath} = Total_{ExecPath} + Curr_{ExecPath}$$
$$Delete\_nodes\_from \quad Curr_{ExecPath} \quad till\_last\_added \ RightChild$$
$$Adjust\_Counter$$
$$Elseif \quad Exists(LeftChild) \quad and \ LeftChild \not\subset Curr_{ExecPath}$$
$$Push \quad LeftChild \quad on \quad Stack$$
$$endif$$
$$endwhile$$
$$Return \quad Total_{ExecPath}$$

As a result of the algorithm operation the sequence of ID blocks is obtained, i.e. representing the graph in the form of node sequence at depth-first traversal.

Then, it is necessary to go over each block pursuant to its execution, extracting operation codes and rejecting their operands. Finally, the executable file profile is obtained, which is represented by operation code sequence as illustrated below.

```
'xor', 'inc', 'mov', 'cmp', 'jz', 'mov', 'test', 'jnz', 'mov', 'push', 'push', 'call', 'pop', 'pop',
'pop', 'mov', 'test', 'jnz', 'push', 'push', 'call', 'cmp', 'jnz', 'mov', 'mov', 'mov', 'mov', 'cmp',
'call', 'pop', 'test', 'jnz', 'inc', 'jmp', 'call', 'push', 'push', 'call', 'xor', 'mov', 'mov', 'le
'push', 'push', 'call', 'test', 'jnz', 'xor', 'inc', 'mov', 'cmp', 'jz', 'mov', 'test', 'jnz', 'mov'
'cmp', 'jnz', 'push', 'push', 'call', 'pop', 'pop', 'mov', 'test', 'jnz', 'push', 'push', 'call', 'ca
'jz', 'cmp', 'jnz', 'cmp', 'jz', 'movzx', 'push', 'call', 'pop', 'test', 'jnz', 'inc', 'mov', 'jmp',
```

Then, the analysis of operation code trigram is carried out. Thus, there is a profile for each executable file, and now it is possible to carry out an analysis based on extracted 3-10 gram operation codes.

```
'cmp jbe test', 'jbe test jz', 'test jz cmp', 'jz cmp jnz', 'cmp jnz mov', 'jnz mov test', 'mov test jz', 'test
'test jnz push', 'jnz push pop', 'push pop push', 'pop push push', 'push push push', 'push push push', 'push pus
z', 'cmp jnz cmp', 'jnz cmp jnz', 'cmp jnz mov', 'jnz mov mov', 'mov mov jmp', 'mov jmp call', 'jmp call retn',
'push push call', 'push call xor', 'call xor mov', 'xor mov mov', 'mov mov lea', 'mov lea push', 'lea push call
```

Each such trigram will subsequently be a parameter in our system. Prior to proceed to the classification, these documents (trigram profiles) shall be converted from text to vector representation.

Based on the set of executable file profiles for system training, let us compose a matrix, where each line is an individual document, and each column - unique 3-gram identified as all profiles are composed. Thus, the number of columns in the matrix is the number of unique parameters (i.e. 3-grams) extracted from the documents.

After execution of the previous action the third classifier of the classifier ensemble is created. Provided that, for the purpose of reducing the number of features and selecting the most specific ones we will use, for example, the standard tf-idf algorithm, which is required for estimation of word importance in the document context (profile of one PE file), being a part of the document collection (training sample).

When the reduced feature vector is obtained, it could be transferred to the classifier, e.g. Random Forest Tree Classifier. That is the end of the preparatory step for the first flow graph analysis, and the method proceeds to step 120.

It is worth noting that the fourth classifier is trained on the basis of the second data flow (Data Flow Graph). The detailed description of the executable file's analysis on the basis of data flows is given below.

Data flow analysis - a method to collect information about possible set of values, calculated in different points of the computer program, which identifies what data pass through the program.

Besides, the method of the data flow analysis execution, for example, could consist of setting data-flow equations for each node of the control flow graph (CFG) and solving them by multiple calculation of output from input and data conversions locally in each node until all the system stabilized.

For the purpose of data flow analysis, it is necessary to solve the problem of points definition in the program where the variable has been defined, wherein each assignment is definition, initially and up to what point it has been used until it is overwritten or deleted.

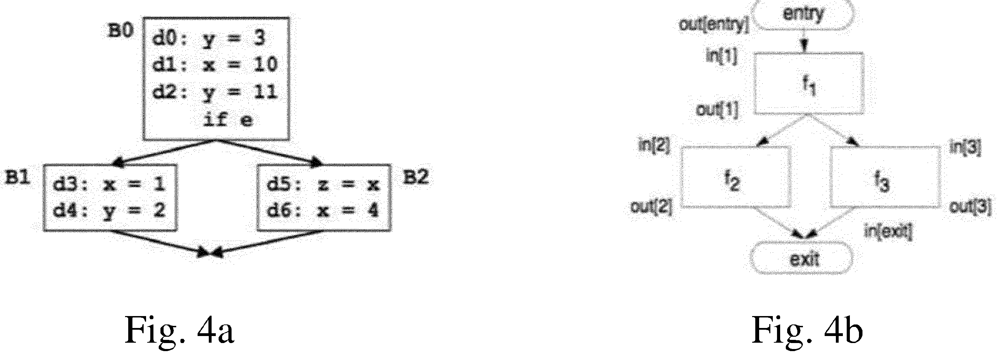

Therefore, d variable reaches p point, if there is such a path from the point following immediately after d to p point, that d is not written over along this path. Each value defined in the program or obtained at program entry relocates with a variety of other variables between the blocks of the control flow graph (Fig. 4a-4b).

Thus, Fig. 4a and 4b illustrate the example of the above-described problem of points definition in the program. B0-B2 mean program blocks, D (definition) - definition of new variable, x,y - variable values, p - block in which d disappears (i.e. the variable has been defined somewhere, then the variable passes from in to out through the blocks and then enters p block, where it is deleted), and f (transfer function of the block) - the function which converts input into output.

Then, let us define the general form of equation for each block:

$$out[b] = Gen[b] \cup (in[b] - Kill[b]) \ (2)$$

where:

Gen[b] - set of values generated in the block;
In[b] - input set of variables in block b;
Kill[b] - set of killed variables in block b;
Out[b] - output set of values.
Where, in[b] = out[p1] $\cup$ out[p2] $\cup$ ... $\cup$ out[pn], where b - each block, p1...pn - all previous blocks leading to this one.

The approximate algorithm for obtaining all input-output data in CFG blocks could be as follows:

```
// Boundary condition
   out[Entry] = Ø

// Initialization for iterative algorithm
   For each basic block B other than Entry
      out[B] = Ø

// iterate
   While (Changes to any out[] occur) {
      For each basic block B other than Entry {
         in[B] = ∪ (out[p]), for all predecessors p of B
         out[B] = f_B(in[B])    // out[B]=gen[B]∪(in[B]-kill[B])
      }
```

After a similar depth-first traversal algorithm with cycles deletion the vector of block numbers in CFG graph is obtained. 2 sets of variables (in and out) relate to each block. Vectors of input and output sets of variables are obtained, wherein each cell comprises a set of input and output variables of each block respectively. Since the analysis of variables themselves is not informative due to a great variety of variables, it is rational to rely on quantitative changes of variable sets in each block.

Thus, for example, many types of malwares replicate themselves infecting other binary files or entering the code into the other system processes. It often results in nearly even distribution of data volumes of outbound edges of respective graph nodes.

Therefore, it is possible to compose a more informative vector from the obtained set of vectors, wherein each cell of this vector comprises a difference between capacities of two sets: input and output variables of the respective block.

Then, using a number of statistical measures (standardized estimate, standard deviation, expected value, interquartile distance) with the obtained vector, and also calculating a window entropy of this vector and applying the same statistical measures to the obtained vector, it is possible to obtain parameters required for transfer to the second flow classifier for analysis.

That is the end of the preparatory step for the second flow graph analysis, and the method proceeds to step 120.

Upon completion of the preparatory step the method proceeds to the operating step 130. Thus, at step 131 obtaining at least one executable file for analysis. Extracting the above data from the executable file by the data extraction module (S10), then at step 132, starting the trained classifier ensemble to detect malicious executable files; and at step 133 outputting the analysis result.

It is worth noting that the classifier ensemble decision could be:

- binary (malicious/no);
- probabilistic (if probability is above 50%, the file is considered to be malicious).

Besides, it is worth noting that in the additional embodiments a report on malicious files detected could be output to the user.

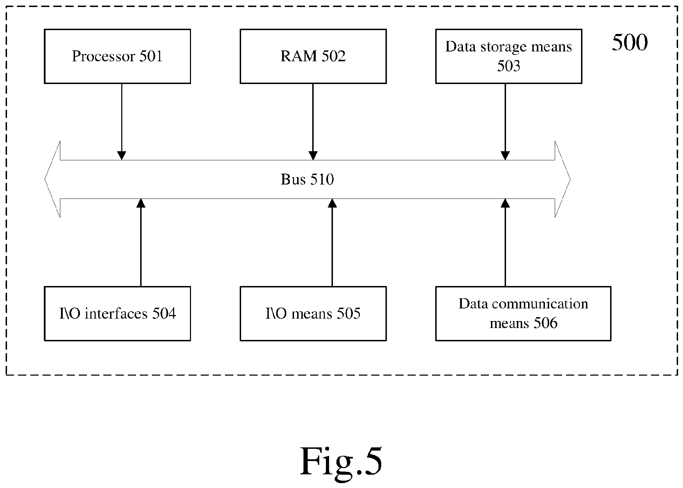

In Fig. 5 hereafter there will be presented the schematic diagram of the computer device (500), processing the data, required for embodiment of the claimed solution.

In general, the device (500) comprises such components as: one or more processors (501), at least one memory (502), data storage means (503), input/output interfaces (504), input/output means (505), networking means (506).

The device processor (501) executes main computing operations, required for functioning the device (500) or functionality of one or more of its components. The processor (501) runs the required machine-readable commands, contained in the random-access memory (502).

The memory (502), typically, is in the form of RAM and comprises the necessary program logic ensuring the required functionality.

The data storage means (503) could be in the form of HDD, SSD, RAID, networked storage, flash-memory, optical drives (CD, DVD, MD, Blue-Ray disks), etc. The means (503) enables to store different information, e.g. the above-mentioned files with user data sets, databases comprising records of time intervals measured for each user, user identifiers, etc.

The interfaces (504) are the standard means for connection and operation with server side, e.g. USB, RS232, RJ45, LPT, COM, HDMI, PS/2, Lightning, FireWire, etc.

Selection of interfaces (504) depends on the specific device (500), which could be a personal computer, mainframe, server cluster, thin client, smartphone, laptop, etc.

Keyboard should be used as data input/output means (505) in any embodiment of the system implementing the described method. There could be any known keyboard hardware: it could be as an integral keyboard used in a laptop or netbook, as a separate device connected to a desk computer, server or other computer device. Provided that, the connection could be as hard-wired, when the keyboard connecting cable is connected to PS/2 or USB-port, located on the desk computer system unit, as wireless, when the keyboard exchanges data over the air, e.g. radio channel with a base station, which, in turn, is connected directly to the system unit, e.g. to one of USB-ports. Besides a keyboard the input/output means could also include: joystick, display (touch-screen display), projector, touch pad, mouse, trackball, light pen, loudspeakers, microphone, etc.

Networking means (506) are selected from a device providing network data receiving and transfer, e.g. Ethernet-card, WLAN/Wi-Fi module, Bluetooth module, BLE module, NFC module, IrDa, RFID module, GSM modem, etc. Making use of the means (505) provides an arrangement of data exchange through wire or wireless data communication channel, e.g. WAN, PAN, LAN, Intranet, Internet, WLAN, WMAN or GSM.

The components of the device (500) are interconnected by the common data bus (510).

The application materials have represented the preferred embodiment of the claimed technical solution, which shall not be used as limiting the other particular embodiments, which are not beyond the claimed scope of protection and are obvious to persons skilled in the art.

## Claims

1. A computer-implemented method for detecting malicious files in a non-isolated environment, the method comprising:

   a preparatory step, comprising:

   - creating (111) a collection of files, the collection of files comprising at least one malicious executable file and at least one non-malicious executable file;
   - analyzing each file in the collection of files, the analysis comprising:

      - extracting data from both binary (112) and disassembled (113) forms of the file, and, based on the extracted data, creating parameters (114) for training a classifier, using a statistical method to determine whether the parameters are specific to malicious files and/or to non-malicious files; and
      - extracting (115) a data flow graph and a control flow graph from the disassembled form of the file;

   - constructing a first feature vector and a second feature vector based on the created parameters; and
   - creating an ensemble of classifiers (120) from: a first trained classifier based on the first feature vector, a second trained classifier based on the second feature vector; a third classifier trained on the basis of the data flow graph, and a fourth classifier trained on the basis of the control flow graph;

      - the creation of the ensemble of classifiers comprising predefining a decisive priority for each classifier, the respective decisive priority being determined based on the accuracy of the classifier; and

   an operating step, comprising:

   - obtaining (131) at least one additional executable file;
   - starting the ensemble of classifiers (132) trained at the preparatory step for detection of malicious executable files to classify the at least one additional executable file, the ensemble of classifiers generating a classifier ensemble decision; and
   - outputting (133) a result based on the classifier ensemble decision.

2. The method of claim 1, wherein the first feature vector comprises all numerical parameters obtained at the analysis, and the second feature vector comprises all string parameters obtained at the analysis.

3. The method of claim 1, wherein extracting the data from the binary form of the file comprises extracting at least the following file properties: Metadata, Import Table, Export Table, Byte/Entropy Histogram.

4. The method of claim 1, wherein creating parameters from the data extracted from the binary form of the executable file comprises creating the at least the following parameters: byte n-grams, information from the executable file fields, file section entropy, metadata, line length distribution histograms.

5. The method of claim 3, wherein the data extracted from the binary form of the executable file comprises at least: a number of sections in the file, a size of headers, a code size, an availability of digital signature, an availability of an imported dll and functions where the imported dll has been used, names of exported functions, data from a resource catalog, an assembler version.

6. The method of claim 3, wherein entropy extracted from the binary form of the executable file is calculated using a sliding-window method followed by a number of statistical measures to characterize the obtained entropy measure vector.

7. The method of claim 3, wherein the metadata extracted from the binary form of the executable file comprises: a number of sections in the file, a size of sections, an availability of a checksum, a file size, a creation time, an operating system version, an assembler version.

8. The method of claim 1, wherein extracting data from the disassembled form of the executable file comprises extracting: characters, registers, operation codes, a system interface (Windows APIs) access rate, sections, metadata.

9. The method of claim 8, further comprising defining a frequency of occurrence of characters extracted from the disassembled form of the executable file, wherein the characters could be at least: "-", "+", "*", "]", "[", "?", "@".

10. The method of claim 8, further comprising calculating a ratio between a number of known registers extracted from the disassembled form of the executable file and a number of unknown registers extracted from the disassembled form of the executable file.

11. The method of claim 8, wherein the sections extracted from the disassembled form of the executable file are predefined and the sections are: .text, .data, .bss, .rdata, .edata, .idata, .rsrc, .tls and .reloc.

12. The method of claim 8, wherein the metadata extracted from the disassembled form of the executable file are a file size and a number of code lines.

13. The method of claim 1, wherein the analysis result is binary or probabilistic.

14. The method of claim 1, wherein the decisive priority of each ensemble of classifiers is defined based on a test sample, wherein at least the following is used for estimation: accuracy, completeness, F-measure.

15. A system for detecting malicious files in a non-isolated environment, the system comprises:

   a data extraction module configured to extract data from at least one executable file;
   a computer device configured to implement the method for detecting malicious files in a non-isolated environment according to claims 1-14; and an output module.


**Patentansprüche**

1. Computerimplementiertes Verfahren zum Detektieren von schädlichen Dateien in einer nicht-isolierten Umgebung, das Verfahren umfassend: einen Vorbereitungsschritt, umfassend:

   - Erzeugen (111) einer Sammlung von Dateien, wobei die Sammlung von Dateien mindestens eine schädliche ausführbare Datei und mindestens eine nicht-schädliche ausführbare Datei umfasst;
   - Analysieren jeder Datei in der Sammlung von Dateien, die Analyse umfassend:

      - Extrahieren von Daten sowohl aus der Binärform (112) als auch aus der disassemblierten Form (113) der Datei und, basierend auf den extrahierten Daten, Erzeugen von Parametern (114) zum Trainieren eines Klassifikators, unter Verwendung eines statistischen Verfahrens, Feststellen, ob die Parameter spezifisch für schädliche Dateien und/oder für nicht-schädliche Dateien sind; und
- Extrahieren (115) eines Datenflussgraphen und eines Kontrollflussgraphen aus der disassemblierten Form der Datei;

- Erstellen eines ersten Merkmalsvektors und eines zweiten Merkmalsvektors basierend auf den erzeugten Parametern; und
- Erzeugen eines Klassifikatorensembles (120) aus: einem ersten trainierten Klassifikator basierend auf dem ersten Merkmalsvektor; einem zweiten trainierten Klassifikator basierend auf dem zweiten Merkmalsvektor; einem auf Basis des Datenflussgraphen trainierten dritten Klassifikator, und einem auf Basis des Kontrollflussgraphen trainierten vierten Klassifikator;

- wobei das Erzeugen des Klassifikatorensembles das Vordefinieren einer entscheidenden Priorität für jeden Klassifikator umfasst, wobei die jeweilige entscheidende Priorität basierend auf der Genauigkeit des Klassifikators bestimmt wird, und

einen Betriebsschritt, umfassend:

- Erhalten (131) mindestens einer zusätzlichen ausführbaren Datei;
- Starten des im Vorbereitungsschritt zum Detektieren von schädlichen ausführbaren Dateien trainierten Klassifikatorensembles (132), um die mindestens eine zusätzliche ausführbare Datei zu klassifizieren, wobei das Klassifikatorensemble eine Klassifikatorensembleentscheidung generiert; und
- Ausgeben (133) eines Ergebnisses basierend auf der Klassifikatorensembleentscheidung.

2. Verfahren nach Anspruch 1, wobei der erste Merkmalsvektor alle bei der Analyse erhaltenen numerischen Parameter umfasst und der zweite Merkmalsvektor alle bei der Analyse erhaltenen Zeichenkettenparameter umfasst.

3. Verfahren nach Anspruch 1, wobei Extrahieren der Daten aus der Binärform der Datei Extrahieren mindestens der folgenden Dateieigenschaften umfasst: Metadaten, Importtabelle, Exporttabelle, Byte-/Entropiehistogramm.

4. Verfahren nach Anspruch 1, wobei Erzeugen von Parametern aus den aus der Binärform der ausführbaren Datei extrahierten Daten Erzeugen mindestens der folgenden Parameter umfasst: Byte-n-Grams, Informationen aus den Feldern der ausführbaren Datei, Dateiabschnittentropie, Metadaten, Verteilungshistogramme der Zeilenlänge.

5. Verfahren nach Anspruch 3, wobei die aus der Binärform der ausführbaren Datei extrahierten Daten mindestens umfassen: Anzahl der Abschnitte in der Datei, Größe der Header, Codegröße, Vorhandensein einer digitalen Signatur, Vorhandensein eines importierten dll und von Funktionen, bei denen die importierte dll verwendet wurde, Namen der exportierten Funktionen, Daten aus einem Ressourcenkatalog, Assemblerversion.

6. Verfahren nach Anspruch 3, wobei eine aus der Binärform der ausführbaren Datei extrahierte Entropie unter Verwendung eines Gleitfensterverfahrens berechnet wird, gefolgt von einer Anzahl statistischer Maße, um den erhaltenen Entropiemaßvektor zu charakterisieren.

7. Verfahren nach Anspruch 3, wobei die aus der Binärform der ausführbaren Datei extrahierten Metadaten Folgendes umfassen: Anzahl von Abschnitten in der Datei, Größe der Abschnitte, Verfügbarkeit einer Prüfsumme, Dateigröße, Erstellungszeitpunkt, Betriebssystemversion, Assemblerversion.

8. Verfahren nach Anspruch 1, wobei das Extrahieren von Daten aus der disassemblierten Form der ausführbaren Datei Extrahieren von Folgenden umfasst: Zeichen, Registern, Operationscodes, Zugriffsrate einer Systemschnittstelle (Windows-APIs), Abschnitte und Metadaten umfasst.

9. Verfahren nach Anspruch 8, ferner umfassend das Definieren einer Häufigkeit des Auftretens von Zeichen, die aus der disassemblierten Form der ausführbaren Datei extrahiert wurden, wobei die Zeichen mindestens sein können: "-", "+", "*", "]", "[", "?", "@".

10. Verfahren nach Anspruch 8, ferner umfassend das Berechnen eines Verhältnisses zwischen einer Anzahl bekannter Register, die aus der disassemblierten Form der ausführbaren Datei extrahiert wurden, und einer Anzahl unbekannter Register, die aus der disassemblierten Form der ausführbaren Datei extrahiert wurden.

11. Verfahren nach Anspruch 8, wobei die aus der disassemblierten Form der ausführbaren Datei extrahierten Abschnitte vordefiniert sind und die Abschnitte folgende sind: .text, data, .bss, .rdata, .edata, .idata, .rsrc, .tls und .reloc.

12. Verfahren nach Anspruch 8, wobei die aus der disassemblierten Form der ausführbaren Datei extrahierten Metadaten eine Dateigröße und eine Anzahl von Codezeilen sind.

13. Verfahren nach Anspruch 1, wobei das Analyseergebnis binär oder probabilistisch ist.

14. Verfahren nach Anspruch 1, wobei die entscheidende Priorität jedes Klassifikatorensembles basierend auf einer Testprobe definiert wird, wobei mindestens Folgendes für die Schätzung verwendet wird: Genauigkeit, Vollständigkeit, F-Maß.

15. System zum Detektieren von schädlichen Dateien in einer nicht-isolierten Umgebung, das System umfassend:

ein Datenextraktionsmodul, das zum Extrahieren von Daten aus mindestens einer ausführbaren Datei ausgebildet ist;
eine Rechnervorrichtung, die zur Umsetzung des Verfahrens zum Detektieren von schädlichen Dateien in einer nicht-isolierten Umgebung nach den Ansprüchen 1 bis 14 ausgebildet ist; und
ein Ausgabemodul.

**Revendications**

1. Procédé mis en œuvre par ordinateur pour détecter des fichiers malveillants dans un environnement non isolé, le procédé comprenant : une étape préparatoire, comprenant :

- créer (111) une collection de fichiers, la collection de fichiers comprenant au moins un fichier exécutable malveillant et au moins un fichier exécutable non malveillant ;
- analyser chaque fichier dans la collection de fichiers, l'analyse comprenant :

- extraire des données à partir des formes binaires (112) et désassemblée (113) du fichier, et, sur la base des données extraites, créer des paramètres (114) pour entraîner un classificateur, en utilisant une méthode statistique pour déterminer si les paramètres sont spécifiques à des fichiers malveillants et/ou à des fichiers non malveillants ; et
- extraire (115) un graphe de flux de données et un graphe de flux de contrôle à partir de la forme désassemblée du fichier ;

- construire un premier vecteur de caractéristiques et un deuxième vecteur de caractéristiques sur la base des paramètres créés ; et
- créer un ensemble de classificateurs (120) à partir : d'un premier classificateur entraîné basé sur le premier vecteur de caractéristiques, d'un deuxième classificateur entraîné basé sur le deuxième vecteur de caractéristiques ; d'un troisième classificateur entraîné sur la base du graphe de flux de données, et d'un quatrième classificateur entraîné sur la base du graphe de flux de contrôle ;

- la création de l'ensemble de classificateurs comprenant la prédéfinition d'une priorité décisive pour chaque classificateur, la priorité décisive respective étant déterminée en fonction de la précision du classificateur ; et

une étape opérationnelle, comprenant :

- obtenir (131) au moins un fichier exécutable supplémentaire ;
- lancer l'ensemble de classificateurs (132) formés lors de l'étape préparatoire pour la détection de fichiers exécutables malveillants afin de classer le au moins un fichier exécutable supplémentaire, l'ensemble de classificateurs générant une décision d'ensemble de classificateurs ; et
- sortir (133) un résultat basé sur la décision de l'ensemble de classificateurs.

2. Procédé selon la revendication 1, dans lequel le premier vecteur de caractéristiques comprend tous les paramètres numériques obtenus lors de l'analyse, et le deuxième vecteur de caractéristiques comprend tous les paramètres de chaîne obtenus lors de l'analyse.

**3.** Procédé selon la revendication 1, dans lequel extraire les données de la forme binaire du fichier comprend extraire au moins les propriétés de fichier suivantes : Métadonnées, Tableau d'importation, Tableau d'exportation, Histogramme d'octets/entropie.

**4.** Procédé selon la revendication 1, dans lequel créer des paramètres à partir des données extraites de la forme binaire du fichier exécutable comprend créer au moins les paramètres suivants :
n-grammes d'octets, informations provenant des champs du fichier exécutable, entropie de la section du fichier, métadonnées, histogrammes de distribution de la longueur des lignes.

**5.** Procédé selon la revendication 3, dans lequel les données extraites de la forme binaire du fichier exécutable comprennent au moins : un nombre de sections dans le fichier, une taille d'en-têtes, une taille de code, une disponibilité de signature numérique, une disponibilité d'un dll importé et de fonctions où le dll importé a été utilisé, des noms de fonctions exportées, des données provenant d'un catalogue de ressources, une version d'assembleur.

**6.** Procédé selon la revendication 3, dans lequel l'entropie extraite de la forme binaire du fichier exécutable est calculée à l'aide d'une méthode à fenêtre glissante suivie d'un certain nombre de mesures statistiques afin de caractériser le vecteur de mesure d'entropie obtenu.

**7.** Procédé selon la revendication 3, dans lequel les métadonnées extraites de la forme binaire du fichier exécutable comprennent : un nombre de sections dans le fichier, une taille de sections, la disponibilité d'une somme de contrôle, une taille de fichier, une heure de création, une version du système d'exploitation, une version de l'assembleur.

**8.** Procédé selon la revendication 1, dans lequel extraire des données à partir de la forme désassemblée du fichier exécutable comprend extraire : des caractères, des registres, des codes d'opération, un taux d'accès à l'interface système (API Windows), des sections, des métadonnées .

**9.** Procédé selon la revendication 8, comprenant en outre la définition d'une fréquence d'occurrence des caractères extraits de la forme désassemblée du fichier exécutable, dans lequel les caractères peuvent être au moins : "-", "+", "*", "]", "[", "?", "@".

**10.** Procédé selon la revendication 8, comprenant en outre calculer un rapport entre un nombre de registres connus extraits de la forme désassemblée du fichier exécutable et un nombre de registres inconnus extraits de la forme désassemblée du fichier exécutable.

**11.** Procédé selon la revendication 8, dans lequel les sections extraites de la forme désassemblée du fichier exécutable sont prédéfinies et les sections sont : .text, .data, .bss, .rdata, .edata, .idata, rsrc, .tls et .reloc.

**12.** Procédé selon la revendication 8, dans lequel les métadonnées extraites de la forme désassemblée du fichier exécutable sont une taille de fichier et un nombre de lignes de code.

**13.** Procédé selon la revendication 1, dans lequel le résultat de l'analyse est binaire ou probabiliste.

**14.** Procédé selon la revendication 1, dans lequel la priorité décisive de chaque ensemble de classificateurs est définie sur la base d'un échantillon test, dans lequel au moins les éléments suivants sont utilisés pour l'estimation : précision, exhaustivité, F-mesure.

**15.** Système permettant de détecter des fichiers malveillants dans un environnement non isolé, le système comprenant :

un module d'extraction de données configuré pour extraire des données d'au moins un fichier exécutable ;
un dispositif informatique configuré pour mettre en œuvre le procédé permettant de détecter des fichiers malveillants dans un environnement non isolé selon les revendications 1 à 14 ;
et un module de sortie.

| Data Extraction Module | | Computer Device | | Output Module |

S10                  S20                  S30

Fig.1

100

| Creating a collection of files comprising a large number of definitely malicious files and definitely non-malicious files | 111 |

| Analyzing a binary executable file, extracting data from the file | 112 |

| Disassembling the executable file, and then, extracting data from the file | 113 |

| Determining the parameters specific to malicious files and/or vice versa to non-malicious files | 114 |

| Obtaining at least the first flow graph and second flow graph from the disassembled file | 115 |

| Dividing the extracted parameters into numerical and string and combining into the first and second feature vector | 116 |

| Creating an ensemble of classifiers | 120 |

130

| Obtaining at least one executable file | 131 |

| Starting the trained ensemble of classifiers for detection of malicious executable files | 132 |

| Outputting the analysis result | 133 |

# Fig.2

Malicious files          Non-malicious files          Unknown file

Disassembling the files

Extracting the first flow (control flow graph)

Extracting data

Computing the extracted data

Selecting the most characteristic data

Training a classifier

Defining malicious or non-malicious

Non-malicious files

Malicious files

# Fig.3

Fig. 4a

Fig. 4b

EP 3 968 197 B1

| Processor 501 | RAM 502 | Data storage means 503 | 500 |

Bus 510

| I\O interfaces 504 | I\O means 505 | Data communication means 506 |

# Fig.5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20190005239 A1
- RU 2654146 C1